# EUROPEAN PATENT SPECIFICATION

(11) **EP 3 540 750 B1**
(45) Date of publication and mention of the grant of the patent: **05.05.2021**
(21) Application number: 18162341.4
(22) Date of filing: 16.03.2018
(51) Int. Cl.: H01H 9/54, H01H 33/59, H02H 7/26, H02J 3/36

(54) **HVDC CIRCUIT BREAKER, HVDC SWITCHYARD, HVDC SWITCHYARD SYSTEM, AND HVDC GRID**
HVDC-SCHUTZSCHALTER, HVDC-UMSPANNANLAGE, HVDC-UMSPANNANLAGENSYSTEM UND HVDC-NETZ
DISJONCTEUR HVDC, POSTE DE MANOEUVRE HVDC, SYSTÈME DE POSTES DE MANOEUVRE HVDC ET GRILLE HVDC

(43) Date of publication of application: 18.09.2019
(73) Proprietor: ABB Power Grids Switzerland AG, 5400 Baden (CH)
(72) Inventor: BISKOPING, Matthias, 69493 Hirschberg-Leutershausen (DE)
(74) Representative: Epping - Hermann - Fischer

(56) References cited:
- US-A1- 2015 022 928
- DATABASE WPI Week 201754 Thomson Scientific, London, GB; AN 2017-428464 XP002784156, -& CN 106 848 999 A (KANG C) 13 June 2017 (2017-06-13)
- DATABASE WPI Week 201655 Thomson Scientific, London, GB; AN 2016-46882T XP002784157, -& CN 105 790 236 A (NANJING NARI-RELAYS ENG TECHNOLOGY CO) 20 July 2016 (2016-07-20)

## Description

### TECHNICAL FIELD

The present disclosure relates to an HVDC circuit breaker, an HVDC switchyard, an HVDC switchyard system, and an HVDC grid comprising an HVDC switchyard and/or an HVDC switchyard system.

### BACKGROUND ART

Traditionally, HVDC transmission systems have mostly been in use to connect one AC system to another AC system, i. e. in a point-to-point configuration. In a back-to-back HVDC link, for example, unsynchronized AC grids are coupled with each other. Point-to-point HVDC links are also used to transmit electrical power to remote sites, such as islands etc.

In recent years, multi-point HVDC transmission systems such as HVDC grids having multiple branches (multiple terminals) are used. Since only active power and zero reactive power is transferred in a multi-point HVDC grid, this can contribute to lower the transmission losses as compared to AC grids.

Fault current interruption in a HVDC grid is more challenging than in AC grids. While mechanical HVDC breakers exist, their interruption time is in the order of several tens of milliseconds. Due to the frequent zero crossings in an AC grid, and due to the relatively high impedance, interrupting an undesired high current, or overcurrent, is not as time critical as in the case of a DC transmission technique. The low impedance in an HVDC grid leads to a comparatively fast fault penetration, and thus a secure timeframe for fault clearance is in the range of a few milliseconds, e. g. less than 5 ms, in order not to disturb stations as far away as 200 km. For example, a line fault leading to an overcurrent is a short-circuit situation of a grid branch or grid segment, or an earth fault.

In order to limit the effects of a line fault, an HVDC circuit breaker needs a fast reaction time. Assuming an exemplary 320 kV HVDC grid having an HVDC reactor of 100 mH, a fault current will rise with about 3.5 kA/ms. Thus, it is desirable to interrupt the current already in the rising stage (the transient stage), such as in about 2 ms after the fault occurs. Such a fast reaction time can be achieved by semiconductor-based HVDC circuit breakers, which in turn have an undesirably high conduction loss of about 30%.

Fast hybrid HVDC circuit breakers have been proposed which combine a comparatively slow mechanical switch having low conduction losses with a fast semiconductor-based commutation switch. The hybrid circuit breaker comprises a main switch branch and a bypass branch connected in parallel to each other. The main switch branch comprises a series connection of semiconductor switches capable of interrupting a fault current. In the bypass branch, a fast mechanical disconnector is connected in series with a semiconductor-based load commutation switch.

During normal operation of the hybrid circuit breaker, the current flows through the bypass branch. In the case of an HVDC fault, the load commutation switch in the bypass branch commutates the current to the main switch branch, the fast mechanical disconnector opens, and the current is interrupted in the main switch branch. In this way, the rated voltage of the load commutation switch can be relatively low, and the on-state (conducting state) voltage of the load commutation switch is in the range of a few volts, thus reducing the transfer losses. Since the load commutation operation leads to substantially zero current in the bypass branch, the mechanical disconnector opens with low voltage stress.

The conventional hybrid circuit breaker is well-suited for point-to-point HVDC connections, i. e. in an HVDC system having two interconnected segments. However, when the conventional hybrid circuit breaker described above is used in a multi-terminal HVDC system, one hybrid circuit breaker per interconnected segment has to be provided. In the exemplary case of three interconnected segments, one conventional hybrid circuit breaker is provided for each segment interconnection, i. e. a total of three fast mechanical disconnectors and three load commutation switches in the bypass branch, plus three times the semiconductor switches needed in the main switch branches. Thus, there is a need for a simpler configuration in the case of three or more interconnected segments Document CN106848999 discloses a device according to the preamble of claim 1.

### SUMMARY

According to an aspect of the present disclosure, an HVDC circuit breaker is provided. The HVDC circuit breaker comprises three or more terminals and, for each group of two of the terminals, a respective inter-terminal connection branch between the terminals. The inter-terminal connection branches each comprise at least one commutation switch arrangement. Each commutation switch arrangement comprises one commutation switch or one commutation switch per bus interconnection. Each commutation switch has a disconnector and a controllable bi-directional semiconductor switch arrangement connected in series. The HVDC circuit breaker further comprises a common main switch configured to take over a switch-off current from each of the commutation switches.

Unless otherwise specified, "connected" or "connection", as used herein, typically refers to a direct connection of the respective parts, i. e. without any further members in between that electrically affect the connected parts.

Normal operation, as used herein, describes a state or time period in which a non-fault operation is present, i. e. a case in which a current in the HVDC system that is interconnectible by the HVDC circuit breaker does not become an overcurrent. An overcurrent may be assumed as a current exceeding a predetermined rated current of the HVDC system or a segment thereof. Typical examples for an overcurrent are a short-circuit current or an earth fault current. The current path in the commutation switch branch is closed during normal operation.

Controllable, as used herein, means that the respective semiconductor switch can be activated/deactivated by means of a control signal. E. g., the semiconductor switch comprises a gate, and the control signal is applied to the gate as a gate signal. In the case of multiple semiconductor switches in an arrangement of semiconductor switches, for example, a common gate signal may be applied to all gates substantially simultaneously.

A bi-directional semiconductor switch arrangement, as used herein, is for example an arrangement of unidirectional semiconductor switches that are disposed and connected in such a manner as to be able to conduct currents and block voltages of both polarities. For example, a series connection of two reversely-connected IGBTs (collector-emitter vs. emitter-collector) each having a freewheeling diode connected in parallel (or, in other words, two anti-paralleled IGBTs with series diodes) can be used as a bi-directional semiconductor switch. Only two semiconductor devices are conducting at any given time: The respective collector-emitter path of the conducting IGBT and the diode parallel to the non-conducting IGBT.

In an arrangement of semiconductor switches, such as in a bi-directional semiconductor switch arrangement, multiple pairs of reversely-connected IGBTs are connected in series to achieve a desired operational characteristic, such as a desired operational voltage in the branch.

A switch-off current, as used herein, is a current that is interrupted during a switch-off operation performed by the circuit breaker. The switch-off current also comprises a fault current that has to be interrupted by switching off the circuit breaker in case a fault occurs, such as a line fault leading to an overcurrent (e. g., a short-circuit leading to a short-circuit current).

In the case of a bus-type topology, a bus interconnection is a common interconnection point on the output side of all commutation switches that belong to a respective bus. In some embodiments, one interconnection point is present on the output side to form a one-bus HVDC circuit breaker. In other embodiments, two or more interconnection points may be present on the output side to form a multiple-bus HVDC circuit breaker.

In the technique according to the present disclosure, a common main switch is used for all commutation switches that the common main switch is interconnected with. In other words: one (single) common main switch takes over a switch-off current occurring in any one of the commutation switches. Any one of the commutation switches is configured to commutate, or pass over, the switch-off current to the common main switch that the respective commutation switch shares with the other commutation switch. By the configuration according to the solution described herein, the common main switch is assigned to multiple (e. g., to all) commutation switches that share the common main switch. Such a configuration does not exclude a further main switch, such as an auxiliary main switch or a different main switch in another part of the HVDC system, or a further main switch that is assigned to different commutation switches.

Unless otherwise specified, in the following, current directions denoted "positive" or "negative" are typically to be understood as the technical current directions wherein a current flows from a structure having a positive potential towards a structure having a negative potential.

The HVDC circuit breaker further comprises - for each of the terminals - a respective positive-direction redirect path and a respective negative-direction redirect path. The positive-direction redirect path is connected between the respective terminal and a positive end of the main switch. The negative-direction redirect path is connected between the respective terminal and a negative end of the main switch.

The positive end of the main switch, as used herein, is the end (the main switch terminal) to which a positive-direction current of the switch-off current may be directed in order to make it flow into the main switch, flow through the main switch and have it interrupted. As a result, the negative end of the main switch is the end (the main switch terminal) which the switch-off current takes to flow out of the main switch.

In an exemplary case in which the main switch comprises at least one semiconductor switch (typically, the main switch comprises a plurality of series-connected semiconductor switches, as described further below), the at least one semiconductor switch being a bipolar transistor such as an IGBT, the connecting direction of the main switch is defined by the collector-emitter path of the bipolar transistor. Thus, in such an exemplary case, the positive end of the main switch relates to the collector of the most upstream bipolar transistor in the series connection, and the negative end of the main switch relates to the emitter of the most downstream bipolar transistor in the series connection.

The positive-direction redirect path generally comprises a semiconductor device, optionally at least one diode and typically a series connection of diodes. The semiconductor device is arranged and configured such as to conduct a positive-direction current to the positive end of the main switch. In the exemplary case of a diode or a series connection of diodes, the diodes are arranged in their respective conducting direction (forward direction) such as to conduct the positive-direction current to the positive end of the main switch. The positive-direction redirect path blocks currents from flowing in the opposite direction.

Likewise, the negative-direction redirect path generally comprises a semiconductor device, optionally at least one diode and typically a series connection of diodes.. The semiconductor device is arranged and configured such as to conduct a positive-direction current flowing out from the negative end of the main switch.. In the exemplary case of a diode or a series connection of diodes, the diodes are arranged in their respective conducting direction (forward direction) such as to conduct the positive-direction current flowing out from the negative end of the main switch. Again, the negative-direction redirect path blocks currents from flowing in the opposite direction.

The respective redirect paths are provided for each of the terminals of the HVDC circuit breaker. In other words: One positive-direction redirect path is provided per terminal of the HVDC circuit breaker, and one negative-direction redirect path is provided per terminal of the HVDC circuit breaker. In the case of an overcurrent such as a short-circuit current occurring between one of the groups of two of the terminals, the redirect paths provided for the respective involved terminals force a current flow in the respective short-circuit branch to the main switch, where the current flow can be safely interrupted.

In embodiments, the main switch comprises at least one controllable semiconductor switch. Controllable, as used herein, means that it can be activated and/or deactivated by means of a control signal. Typically, a controllable semiconductor switch, as used herein, can be activated and deactivated by means of the control signal. The control signal may be supplied from an external device, or may be generated by the HVDC circuit breaker itself. A typical example of a controllable semiconductor switch is a power semiconductor device (or a series connection thereof) that can controllably be brought into a conducting state (an ON state) and into a non-conducting state (an OFF state), such as an insulated gate bipolar transistor (IGBT). In the exemplary case of an IGBT or a series connection of IGBTs, each IGBT comprises a gate terminal, and the control signal is supplied as a gate signal to each gate terminal of each IGBT.

In embodiments, the main switch comprises at least one surge protection device further to the at least one controllable semiconductor switch. The at least one surge protection device is typically provided in the form of a varistor. The surge protection device is connected in parallel to the at least one semiconductor switch. In the exemplary case of a series connection of multiple controllable semiconductor switches in the main switch, the varistor may also be connected in parallel to the series connection in order to match the threshold voltages. Optionally, the plurality of controllable semiconductor switches within the series connection is divided into (typically equally sized) groups of semiconductor switches, and one varistor per group is connected in parallel to the respective group in order to match the threshold voltage of the respective group.

In embodiments, the HVDC circuit breaker further comprises a residual current disconnecting circuit breaker between each of the terminals and the corresponding inter-terminal connection branch. A residual current disconnecting circuit breaker may be a relatively slow disconnector, such as a mechanical disconnector. The residual current disconnecting circuit breaker may be operated after an overcurrent has been commutated to the main switch in order to be interrupted by the main switch, and separate the faulty parts of the system.

In embodiments, the HVDC circuit breaker has multiple buses, and at least one of the inter-terminal connection branches comprises a commutation switch arrangement having multiple commutation switches connected such that each commutation switch of the inter-terminal connection branch is assigned to a single one of the buses.. Typically, each inter-terminal connection branch comprises a commutation switch arrangement having multiple commutation switches, and corresponding ones of the commutation switches that are assigned to or correspond to different terminals are connected such as to form the bus at a bus interconnection point on their output end. In this way, each of the terminals is connectible, via an assigned bus that is configured by the respective commutation switches belonging to the bus, to the respective other terminals. Thereby, a redundant configuration is achieved.

In embodiments, the HVDC circuit breaker comprises one commutation switch arrangement per inter-terminal connection branch. One end of the commutation switch arrangement is connected to a first one of the two terminals of the respective inter-terminal connection branch. The other end of the commutation switch is connected to a second one of the two terminals of the respective inter-terminal connection switch. According to this solution, during normal operation, the current flowing between each two of the terminals passes one commutation switch arrangement, which may contribute to relatively low losses.

In embodiments, the HVDC circuit breaker comprises one commutation switch arrangement per terminal. One end of each commutation switch arrangement is connected to the respective terminal. The other end of the commutation switch arrangement is (typically directly) connected to a common interconnection point, wherein the common interconnection point is shared with the other ends of the remaining commutation switch arrangements. In this solution, during normal operation, the current flowing between each two of the terminals passes two commutation switch arrangements, while the number of commutation switch arrangements is reduced in particular in the case that more than three terminals are to be connected by the HVDC circuit breaker.

In embodiments, the HVDC circuit breaker comprises more than three terminals. Each of the terminals is connectible and separable from one another by means of the commutation switch arrangements and common main switch. In the case of more than three terminals, in each of the embodiments described herein, only one common main switch is needed, which can contribute to cost reduction. In particular in the case of a HVDC comprising more than three terminals and comprising one commutation switch arrangement per terminal, wherein the commutation switches share a common interconnection point, a significant reduction of the number of parts is possible also for the commutation switches, when comparing with the prior art solutions.

According to an aspect, the HVDC circuit breaker further comprises a network interface for connecting the HVDC circuit breaker to a data network, in particular a global data network. The data network may be an Ethernet network using TCP/IP such as LAN, WAN or Internet.

The HVDC circuit breaker is operatively connected to the network interface for carrying out commands received from the data network. The commands may include a control command for controlling the HVDC circuit breaker to establish a connection between some or each of the terminals, or to disconnect the terminals from one another. In this case, the HVDC circuit breaker is adapted for carrying out the establishing or disconnecting in response to the control command.

The commands may include a status request. In response to the status request, or without prior status request, the HVDC circuit breaker may be adapted for sending a status information to the network interface, and the network interface is then adapted for sending the status information over the network. The commands may include an update command including update data. In this case, the HVDC circuit breaker is adapted for initiating an update in response to the update command and using the update data. The data network may comprise distributed storage units such as Cloud. The Cloud may be adapted to store information issued by the HVDC circuit breaker in response to a status request or a plurality of status requests. Depending on the application, the Cloud can be in form of public, private, hybrid or community Cloud.

According to a further aspect, an HVDC switchyard is provided. The HVDC switchyard is configured to interconnect three or more HVDC grid segments. At least one pole of each grid segment is connected to a respective terminal of an HVDC circuit breaker as described herein.

An HVDC switchyard may interconnect, for example, multiple DC transmission lines from different HVDC stations. If an earth fault or short-circuit fault occurs in one of the DC transmission lines, the HVDC circuit breaker in the HVDC switchyard may operate and trip the faulty DC transmission line so that any overcurrent resulting from the fault is limited. The remaining transmission lines may continue to operate. Typically, a switchyard comprises a plurality of busbars each corresponding to one of the DC transmission lines. The switchyard is typically designed such that a busbar of the switchyard can be tripped from each of the other busbars by the HVDC circuit breaker of the switchyard.

In embodiments, the HVDC switchyard is configured to interconnect more than three HVDC grid segments. Also for the HVDC switchyard, the commutation switches of the HVDC circuit breaker used to interconnect the HVDC grid segments share a common interconnection point. Thus, a significant reduction of the number of parts is possible when comparing with the prior art solutions.

According to a further aspect, an HVDC switchyard system is provided. By means of the HVDC switchyard system, a first HVDC station is interconnected with at least two further HVDC stations. The HVDC switchyard system comprises the first HVDC station and a HVDC switchyard. At least one pole of the first HVDC station is connected, in the HVDC switchyard, to a terminal of an HVDC circuit breaker as described herein. Typically, an HVDC station comprises an HVDC converter to which transmission lines are connected via a DC interface. For example, the HVDC converter is a voltage source converter or a current source converter.

In embodiments, the HVDC switchyard system is configured to interconnect more the first HVDC station with more than two other HVDC stations. Also for the HVDC switchyard system, the commutation switches of the HVDC circuit breaker used to interconnect the HVDC stations share a common interconnection point. Thus, a significant reduction of the number of parts is possible when comparing with the prior art solutions.

According to a further aspect, an HVDC grid is provided. The HVDC grid includes three or more HVDC grid segments. Optionally, the HVDC grid includes a first HVDC station and at least two further HVDC stations that are optional parts of each of the HVDC grid segments. The HVDC grid comprises the HVDC switchyard as described herein. In the case of HVDC stations, the HVDC grid comprises the HVDC switchyard system as described herein.

### BRIEF DESCRIPTION OF THE DRAWINGS

Fig. 1 shows a schematic circuit diagram of an HVDC circuit breaker in a so-called hybrid configuration for explanatory purposes;
Fig. 2 shows a schematic circuit diagram of an HVDC circuit breaker according to an embodiment of the present disclosure;
Fig. 3 shows a schematic circuit diagram of an HVDC circuit breaker according to another embodiment of the present disclosure; and
Fig. 4 shows a schematic circuit diagram of an HVDC circuit breaker according to another embodiment of the present disclosure.

### DESCRIPTION OF EMBODIMENTS

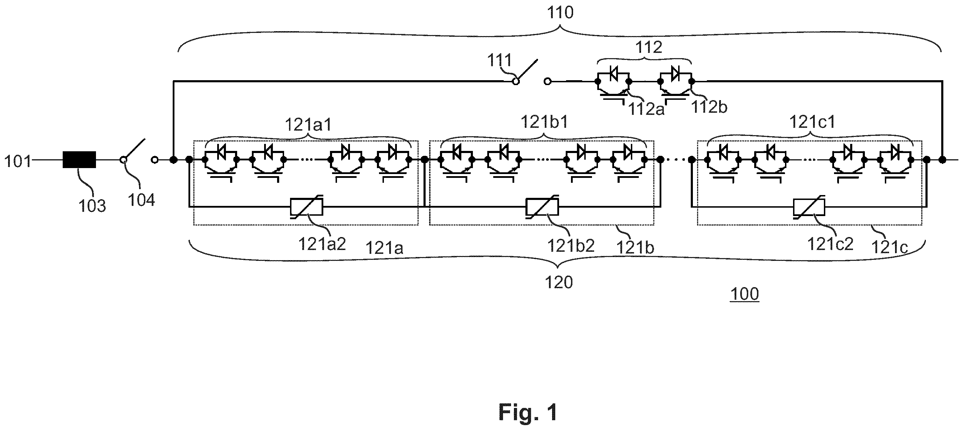

Fig. 1 shows a schematic circuit diagram of an HVDC circuit breaker 100 having a first terminal 101 and a second terminal 102. A series connection of a current limiting reactor 103 and a residual current disconnecting circuit breaker 104 lead to a first branching point 105. Between the first branching point 105 and a second branching point 106 on the opposite side of the circuit breaker, a commutation switch 110 and a main switch 120 are connected in parallel to one another.

The commutation switch comprises a disconnector 111 and a pair of semiconductor switches 112a, 112b (in Fig. 1: IGBTs 112a, 112b) connected in series. The disconnector 111 is typically an ultra-fast mechanical disconnector. Each IGBT 112a, 112b has a free-wheeling diode connected in parallel thereto, with the diode forward direction leading from the emitter to the collector terminal of the respective IGBT. The IGBTs 112a, 112b are connected such as to allow a bi-directional operation, i. e. with their emitters connected to each other. The IGBTs 112a, 112b, together with the free-wheeling diodes, form a bi-directional semiconductor switch arrangement 112.

The main switch 120 comprises a series connection of controllable semiconductor switch groups 121a1, 121b, ..., 121n each having a surge protection device, such as a varistor 121a2, 121b2, ..., 121bn, connected in parallel thereto. In each switch group 121a1, a series connection of semiconductor switches (in Fig. 1: IGBTs) are connected in series and has a free-wheeling diode connected in parallel thereto, with the diode forward direction leading from the emitter to the collector terminal of the respective IGBT. The IGBTs are connected such as to allow a bi-directional operation.

During a normal operation, i. e. without any overcurrent such as a short-circuit current or earth fault current, the residual current disconnecting circuit breaker 104 and the disconnector 111 in the commutation switch are closed (i. e., conducting), and the bi-directional semiconductor switch arrangements 112 in the commutation switch are also in an ON state to allow a current flow through the commutation switch 110. The commutation switch 110 thus forms a bypass to the main switch. When an HVDC fault (i. e., an overcurrent) occurs, the bi-directional semiconductor switch arrangements 112 and the ultra-fast disconnector 111 of the commutation switch 110 open, and the current is commutated (i. e., forced) to the main switch 120. The main switch 120 is dimensioned such as to safely interrupt the current. Subsequently, the residual current disconnecting circuit breaker 104 is opened.

The groups 121a, 121b, ..., 121n separate the main switch 120 into several sections with individual arrester banks dimensioned for full voltage and current breaking capability. The components of the commutation switch 110 match a lower voltage and energy capability as compared to the main switch 120. In order for the commutation from the commutation switch 110 to the main switch 120 to succeed, a voltage rating of the commutation switch exceeds the on-state voltage of the main switch 120. As a result, typically, the on-state voltage of the commutation switch 120 is in the range of several volts, whereby the transfer losses in the commutation switch are comparatively low.

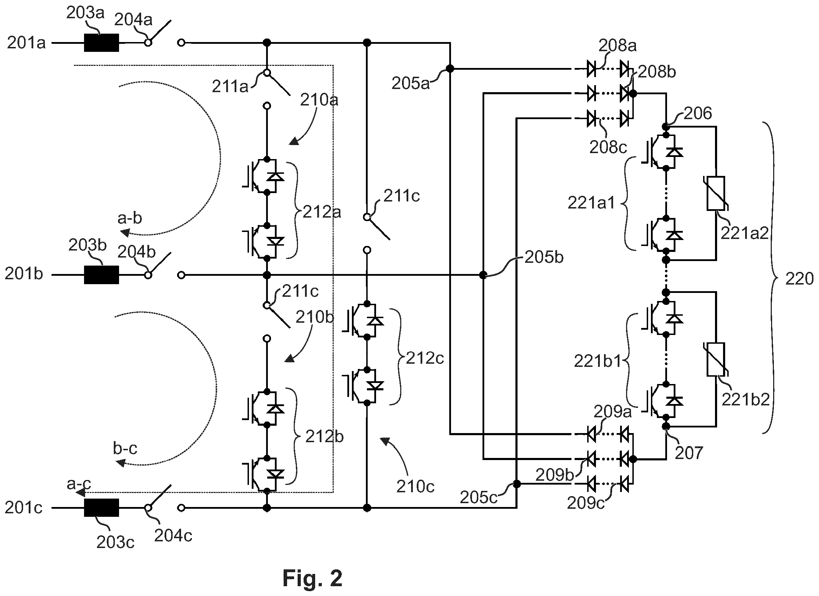

Fig. 2 shows a schematic circuit diagram of an HVDC circuit breaker 200 according to an embodiment of the present disclosure. In Fig. 2, an exemplary number of three parts of an HVDC grid (not shown) are connected to the terminals 201a, 201b, 201c of the HVDC circuit breaker 200. An exemplary case of three terminals 201a, 201b, 201c is shown; however, more than three terminals may be provided. Without limitation, in the embodiments described herein, it is assumed that the terminals 201a, 201b, 201c connect grid parts having a positive polarity; however, a negative polarity is also possible.

Terminal 201a is connected to a series connection comprising a current limiting reactor 203a and a residual current disconnecting circuit breaker 204a. Likewise, terminal 201b is connected to a series connection comprising a current limiting reactor 203b and a residual current disconnecting circuit breaker 204b. Likewise, terminal 201c is connected to a series connection comprising a current limiting reactor 203c and a residual current disconnecting circuit breaker 204c.

Each group of two of the terminals comprises a commutation switch 210a, 210b, or 210c, respectively. In the case of a fault (e. g., a short-circuit fault or an earth fault) occurring in any of the grid segments that are connected with the respective one of the terminals 201a, 201b, 201c, The interconnection leading to this terminal has to be interrupted, and the fault current has to be tripped. In the exemplary case of Fig. 2 showing a total number of three terminals 201a, 201b, 201c, commutation switch 210a connects terminal 201a to terminal 201b; commutation switch 210b connects terminal 201b to terminal 201c; and commutation switch 210c connects terminal 201a to terminal 201c. In Fig. 2, the commutation switches 210a, 210b, 201c each form an inter-terminal connection branch.

Commutation switches 210a, 210b, 210c are configured in a similar manner to the commutation switch 110 discussed with reference to Fig. 1. Each commutation switch 210a, 210b, 210c comprises a disconnector and a pair of semiconductor switches (in Fig. 2: IGBTs) connected in series. The disconnector is typically an ultra-fast mechanical disconnector. Each IGBT has a free-wheeling diode connected in parallel thereto, with the diode forward direction leading from the emitter to the collector terminal of the respective IGBT. The IGBTs are connected such as to allow a bi-directional operation, i. e. with their emitters connected to each other. The IGBTs, together with the free-wheeling diodes, form a bi-directional semiconductor switch arrangement.

A common main switch 220 is provided and configured to take over a switch-off current from each of the commutation switches 210a, 210b, 210c. The switch-off current is typically an overcurrent, such as a short-circuit current or an earth fault current. A switch-off current from each commutation switch 210a, 210b, 210c, as used herein, means the main switch is configured to take over the switch-off current no matter in which one of the commutation switches 210a, 210b, 210c the current occurs. In other words: The common main switch 220 is not assigned to one commutation switch only, but to all of the commutation switches 210a, 210b, 210c, which may help to reduce the number of required components.

Like the main switch 110 shown in Fig. 1, also the common main switch 220 comprises a first terminal 206 and a second terminal 207. The first terminal 206 defines a positive end of the common main switch 220, whereas the second terminal 207 defines a negative end of the common main switch 220. Between the first and second terminals 206, 207, a series connection of controllable semiconductor switch groups is provided, each switch group having a surge protection device, such as a varistor, connected in parallel thereto. In each switch group, a series connection of semiconductor switches (in Fig. 2: IGBTs) are connected in series and has a free-wheeling diode connected in parallel thereto, with the diode forward direction leading from the emitter to the collector terminal of the respective IGBT. The IGBTs are connected such as to allow a bi-directional operation.

A series connection of diodes forming a positive-direction redirect path 208a connects a branching point 205a behind terminal 201a to the positive end 206 of the main switch 220, the diodes in the positive-direction redirect path 208a being arranged in their forward direction from the branching point 205a to the positive end 206. Likewise, a series connection of diodes forming a positive-direction redirect path 208b connects a branching point 205b behind terminal 201b to the positive end 206 of the main switch 220, the diodes in the positive-direction redirect path 208b being arranged in their forward direction from the branching point 205b to the positive end 206. Likewise, series connection of diodes forming a positive-direction redirect path 208c connects a branching point 205c behind terminal 201c to the positive end 206 of the main switch 220, the diodes in the positive-direction redirect path 208c being arranged in their forward direction from the branching point 205c to the positive end 206.

A series connection of diodes forming a negative-direction redirect path 209a connects a branching point 205a behind terminal 201a to the negative end 207 of the main switch 220, the diodes in the negative-direction redirect path 209a being arranged in their reverse direction from the branching point 205a to the negative end 207. Likewise, a series connection of diodes forming a negative-direction redirect path 209b connects a branching point 205b behind terminal 201b to the negative end 207 of the main switch 220, the diodes in the negative-direction redirect path 209b being arranged in their reverse direction from the branching point 205b to the negative end 207. Likewise, a series connection of diodes forming a negative-direction redirect path 209c connects a branching point 205c behind terminal 201c to the negative end 207 of the main switch 220, the diodes in the negative-direction redirect path 209c being arranged in their reverse direction from the branching point 205c to the negative end 207.

It is noted that the redirect paths are not limited to diodes as semiconductor elements that ensure an unidirectional flow. For example, it is possible to use thyristors instead of the diodes in the redirect paths and trigger the thyristors accordingly to allow an unidirectional path only, or to use other controllable high-power devices such as MOSFETs.

During normal operation, the currents between the terminals flow via the respective current-limiting reactors 203a, 203b, 203c and the respective residual current disconnecting circuit breakers 204a, 204b, 204c and via the respective commutation switches 210a, 210b, 210c.

In the case of an overcurrent occurring in one of the grid segments connected via any one of the terminals 201a, 201b, 201c, a high current flows in from the other grid segments. The commutation switches 210a, 210b, 210c in which the high current flows are opened. The conduction of the respective redirect paths 208a, 208b, 208c and 209a, 209b, 209c corresponding to the high current flows is enabled, whereby the current is commutated to the common main switch 220. Here, the current can be interrupted via the semiconductors in the common main switch 220. As soon as the current reaches near zero, the diodes stop conducting and the respective residual current disconnecting circuit breaker 204a, 204b, 204c corresponding to the faulty grid segment can be opened, allowing for a safe separation of the faulty grid segment from the other segments.

In the embodiment of Fig. 2, one commutation switch arrangement per inter-terminal connection branch is provided. Even if more than three connections are made, i. e. even in the case of more than three terminals 201a, 201b, 201c, only one common main switch 220 needs to be provided, and only one additional pair of redirect paths 208, 209 per excess connection leading to the common main switch 220.

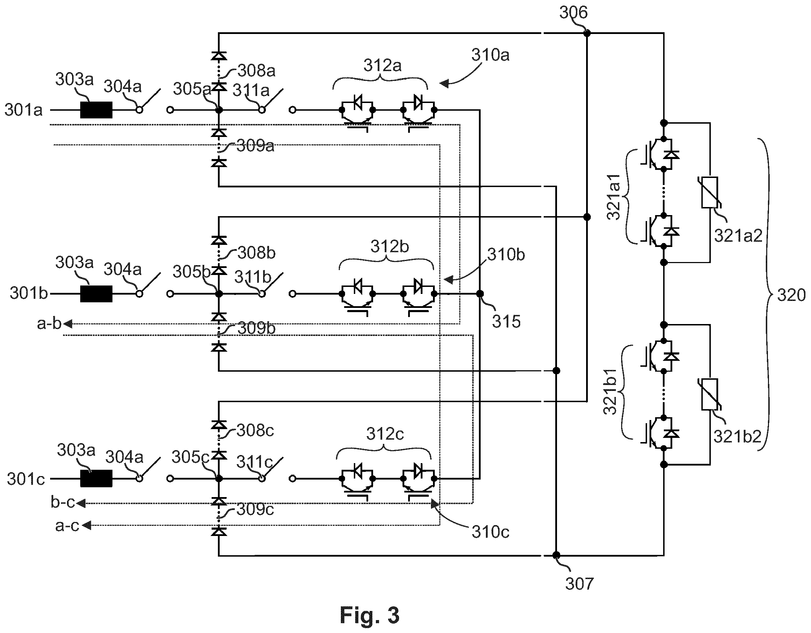

Fig. 3 shows a schematic circuit diagram of an HVDC circuit breaker 300 according to another embodiment of the present disclosure.

As in the embodiment shown in Fig. 2, an exemplary case of three terminals 301a, 301b, 301c is shown; however, more than three terminals may be provided. Terminal 301a is connected to a series connection comprising a current limiting reactor 303a and a residual current disconnecting circuit breaker 304a. Likewise, terminal 301b is connected to a series connection comprising a current limiting reactor 303b and a residual current disconnecting circuit breaker 304b. Likewise, terminal 301c is connected to a series connection comprising a current limiting reactor 303c and a residual current disconnecting circuit breaker 304c.

In the embodiment of Fig. 3, a commutation switch 310a is connected behind the residual current disconnecting circuit breaker 304a; a commutation switch 310b is connected behind the residual current disconnecting circuit breaker 304b; and a commutation switch 310c is connected behind the residual current disconnecting circuit breaker 304c.

Commutation switches 310a, 310b, 310c are configured in a similar manner to the commutation switches 110, 210 discussed with reference to Figs. 1 or 2. Each commutation switch 310a, 310b, 310c comprises a disconnector and a pair of semiconductor switches (in Fig. 3: IGBTs) connected in series. The disconnector is typically an ultra-fast mechanical disconnector. Each IGBT has a free-wheeling diode connected in parallel thereto, with the diode forward direction leading from the emitter to the collector terminal of the respective IGBT. The IGBTs are connected such as to allow a bi-directional operation, i. e. with their emitters connected to each other. The IGBTs, together with the free-wheeling diodes, form a bi-directional semiconductor switch arrangement.

The commutation switches 310a, 301b, 310c share a common interconnection point 315. An inter-terminal connection branch between terminals 301a and 301b is formed by the branch comprising the commutation switch 310a, the common interconnection point 315, and the commutation switch 310b. An inter-terminal connection branch between terminals 301a and 301c is formed by the branch comprising the commutation switch 310a, the common interconnection point 315, and the commutation switch 310c. An inter-terminal connection branch between terminals 301b and 301c is formed by the branch comprising the commutation switch 310b, the common interconnection point 315, and the commutation switch 310c.

A common main switch 320 is provided and configured to take over a switch-off current from each of the commutation switches 310a, 310b, 310c. The switch-off current is typically an overcurrent, such as a short-circuit current or an earth fault current. A switch-off current from each commutation switch 310a, 310b, 310c, as used herein, means the main switch is configured to take over the switch-off current no matter in which one of the commutation switches 310a, 310b, 310c the current occurs. In other words: The common main switch 320 is not assigned to one commutation switch only, but to all of the commutation switches 310a, 310b, 310c, which may help to reduce the number of required components.

Like the main switch 110 shown in Fig. 1, also the common main switch 320 comprises a first terminal 306 and a second terminal 307. The first terminal 306 defines a positive end of the common main switch 320, whereas the second terminal 307 defines a negative end of the common main switch 320. Between the first and second terminals 306, 307, a series connection of controllable semiconductor switch groups is provided, each switch group having a surge protection device, such as a varistor, connected in parallel thereto. In each switch group, a series connection of semiconductor switches (in Fig. 3: IGBTs) are connected in series and has a free-wheeling diode connected in parallel thereto, with the diode forward direction leading from the emitter to the collector terminal of the respective IGBT. The IGBTs are connected such as to allow a bi-directional operation.

A positive-direction redirect path 308a is connected between the branching point 305a and the positive end 306 of the main switch 320, the semiconductor device of the redirect path 308a being configured to provide an unidirectional flow from branching point 305a to the positive end 306. A positive-direction redirect path 308b is connected between the branching point 305b and the positive end 306 of the main switch 320, the semiconductor device of the redirect path 308b being configured to provide an unidirectional flow from branching point 305b to the positive end 306. A positive-direction redirect path 308c is connected between the branching point 305c and the positive end 306 of the main switch 320, the semiconductor device of the redirect path 308c being configured to provide an unidirectional flow from branching point 305c to the positive end 306.

A negative-direction redirect path 309a is connected between the branching point 305a and the negative end 307 of the main switch 320, the semiconductor device of the redirect path 309a being configured to provide an unidirectional flow from branching point 305a to the negative end 307. A negative-direction redirect path 309b is connected between the branching point 305b and the negative end 307 of the main switch 320, the semiconductor device of the redirect path 309b being configured to provide an unidirectional flow from branching point 305b to the negative end 307. A negative-direction redirect path 309c is connected between the branching point 305c and the negative end 307 of the main switch 320, the semiconductor device of the redirect path 309c being configured to provide an unidirectional flow from branching point 305c to the negative end 307.

During normal operation, the currents between the terminals flow via the respective current-limiting reactors 303a, 303b, 303c and the respective residual current disconnecting circuit breakers 304a, 304b, 304c and via the respective commutation switches 310a, 310b, 310c.

In the case of an overcurrent occurring in one of the grid segments connected via any one of the terminals 301a, 301b, 301c, a high current flows in from the other grid segments. The commutation switches 310a, 310b, 310c in which the high current flows are opened. The conduction of the respective redirect paths 308a, 308b, 308c and 309a, 309b, 309c corresponding to the high current flows is enabled, whereby the current is commutated to the common main switch 320. Here, the current can be interrupted via the semiconductors in the common main switch 320. As soon as the current reaches near zero, the diodes stop conducting and the respective residual current disconnecting circuit breaker 304a, 304b, 304c corresponding to the faulty grid segment can be opened, allowing for a safe separation of the faulty grid segment from the other segments.

In the embodiment of Fig. 3, when the number of terminals is extended to more than three, the number of commutation switches can be reduced as compared to the embodiment of Fig. 2.

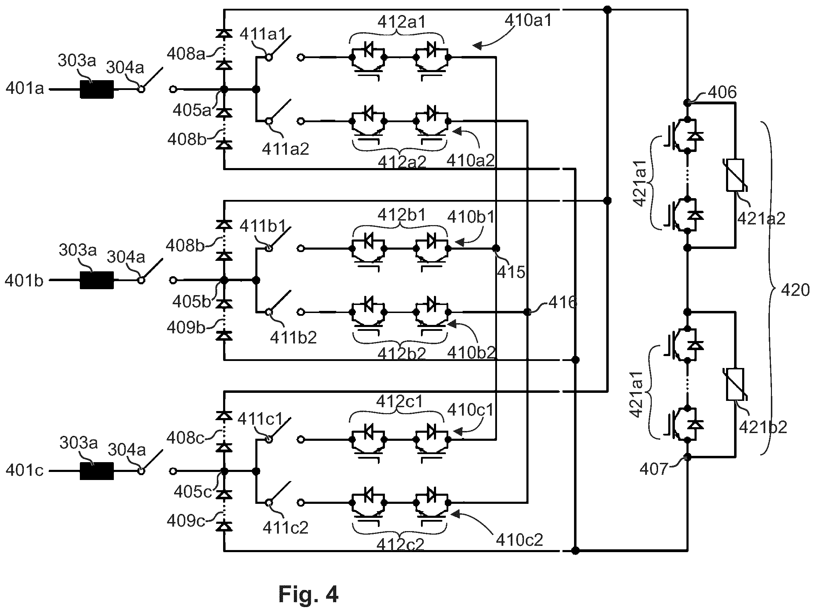

Fig. 4 shows a schematic circuit diagram of an HVDC circuit breaker 400 according to another embodiment of the present disclosure.

As in the embodiment shown in Fig. 3, an exemplary case of three terminals 401a, 401b, 401c is shown; however, more than three terminals may be provided. Terminal 401a is connected to a series connection comprising a current limiting reactor 403a and a residual current disconnecting circuit breaker 404a. Likewise, terminal 401b is connected to a series connection comprising a current limiting reactor 403b and a residual current disconnecting circuit breaker 404b. Likewise, terminal 401c is connected to a series connection comprising a current limiting reactor 403c and a residual current disconnecting circuit breaker 404c.

Each group of two of the terminals comprises an inter-terminal connection having multiple commutation switch arrangements. In the embodiment of Fig. 4, terminals 401a and 401b are connected via commutation switch 410a1, common interconnection point 415, and commutation switch 410b1. In addition, terminals 401a and 401b are connected via commutation switch 410a2, common interconnection point 416, and commutation switch 410b2. Likewise, terminals 401a and 401c are connected via commutation switch 410a1, common interconnection point 415, and commutation switch 410c1. In addition, terminals 401a and 401c are connected via commutation switch 410a2, common interconnection point 416, and commutation switch 410c2. Likewise, terminals 401b and 401c are connected via commutation switch 410b1, common interconnection point 415, and commutation switch 410c1. In addition, terminals 401b and 401c are connected via commutation switch 410b2, common interconnection point 416, and commutation switch 410c2. Common interconnection point 415 forms a first bus, while common interconnection point 416 forms a second bus.

Commutation switches 410al, 410a2, 410b1, 410b2, 410c1, 410c2 are configured in a similar manner to the commutation switch 110 discussed with reference to Fig. 1. Each commutation switch 410a1, 410a2, 410b1, 410b2, 410c1, 410c2 comprises a disconnector and a pair of semiconductor switches (in Fig. 4: IGBTs) connected in series. The disconnector is typically an ultra-fast mechanical disconnector. Each IGBT has a free-wheeling diode connected in parallel thereto, with the diode forward direction leading from the emitter to the collector terminal of the respective IGBT. The IGBTs are connected such as to allow a bi-directional operation, i. e. with their emitters connected to each other. The IGBTs, together with the free-wheeling diodes, form a bi-directional semiconductor switch arrangement.

A common main switch 420 is provided and configured to take over a switch-off current from each of the commutation switches 410a1, 410a2, 410b1, 410b2, 410c1, 410c2. The switch-off current is typically an overcurrent, such as a short-circuit current or an earth fault current. A switch-off current from each commutation switch 410a1, 410a2, 410b1, 410b2, 410c1, 410c2, as used herein, means the main switch is configured to take over the switch-off current no matter in which one of the commutation switches 410a1, 410a2, 410b1, 410b2, 410c1, 410c2 the current occurs. In other words: The common main switch 420 is not assigned to one commutation switch only, but to all of the commutation switches 410a1, 410a2, 410b1, 410b2, 410c1, 410c2, which may help to reduce the number of required components.

As the main switch 110 shown in Fig. 1, the common main switch 420 comprises a first terminal 406 and a second terminal 407. The first terminal 406 defines a positive end of the common main switch 420, whereas the second terminal 407 defines a negative end of the common main switch 420. Between the first and second terminals 406, 407, a series connection of controllable semiconductor switch groups is provided, each switch group having a surge protection device, such as a varistor, connected in parallel thereto. In each switch group, a series connection of semiconductor switches (in Fig. 4: IGBTs) are connected in series and has a free-wheeling diode connected in parallel thereto, with the diode forward direction leading from the emitter to the collector terminal of the respective IGBT. The IGBTs are connected such as to allow a bi-directional operation.

A series connection of diodes forming a positive-direction redirect path 408a connects a branching point 405a behind terminal 401a to the positive end 406 of the main switch 420. The semiconductor device in the positive-direction redirect path 408a is arranged and configured such as to allow a current flow from the branching point 405a to the positive end 406. Likewise, a series connection of diodes forming a positive-direction redirect path 408b connects a branching point 405b behind terminal 401b to the positive end 406 of the main switch 420. The semiconductor device in the positive-direction redirect path 408b is arranged and configured such as to allow a current flow from the branching point 405b to the positive end 406. Likewise, series connection of diodes forming a positive-direction redirect path 408c connects a branching point 405c behind terminal 401c to the positive end 406 of the main switch 420. The semiconductor device in the positive-direction redirect path 408c is arranged and configured such as to allow a current flow from the branching point 405c to the positive end 406.

A series connection of diodes forming a negative-direction redirect path 409a connects a branching point 405a behind terminal 401a to the negative end 407 of the main switch 420. The semiconductor device in the negative-direction redirect path 409a is arranged and configured such as to allow a current flow from the negative end 407 to the branching point 405a. Likewise, a series connection of diodes forming a negative-direction redirect 409b connects a branching point 405b behind terminal 401b to the negative end 407 of the main switch 420. The semiconductor device in the negative-direction redirect path 409b is arranged and configures such as to allow a current flow from the negative end 407 to the branching point 405b. Likewise, a series connection of diodes forming a negative-direction redirect path 409c connects a branching point 405c behind terminal 401c to the negative end 407 of the main switch 420. The semiconductor device in the negative-direction diode branch 409c is arranged and configured such as to allow a current flow from the negative end 407 to the branching point 405c.

The diode configuration for the respective redirect paths 408a, 408b, 408c and 409a, 409b, 409c is only an example, and other semiconductors, such as thyristors or MOSFETs, may be used to ensure the unidirectional flow.

During normal operation, the currents between the terminals flow via the respective current-limiting reactors 403a, 403b, 403c and the respective residual current disconnecting circuit breakers 404a, 404b, 404c and via the respective commutation switches 410a1, 410a2, 410b1, 410b2, 410c1, 410c2,

In the case of an overcurrent occurring in one of the grid segments connected via any one of the terminals 401a, 401b, 401c, a high current flows in from the other grid segments. The commutation switches 410a1, 410a2, 410b1, 410b2, 410c1, 410c2, in which the high current flows are opened. The conduction of the respective redirect paths 408a, 408b, 408c and 409a, 409b, 409c corresponding to the high current flows is enabled, whereby the current is commutated to the common main switch 420. Here, the current can be interrupted via the semiconductors in the common main switch 420. As soon as the current reaches near zero, the diodes stop conducting and the respective residual current disconnecting circuit breaker 404a, 404b, 404c corresponding to the faulty grid segment can be opened, allowing for a safe separation of the faulty grid segment from the other segments.

In the embodiment of Fig. 4, each grid segment can be connected via a different bus 415, 416 when needed. The number of buses is not limited to two, and any number greater than two may be employed as well. Separate grids may be created when needed. For example, in the case in which four or more grid segments are connected to one another and they should be separated from one another, or when one of the grid segments has to be taken offline, the buses can be configured as needed. Again, only one common main switch 420 is needed to trip any overcurrent in any one of the grid segments, connected via any one of the buses 415, 416, safely.

## Claims

1. An HVDC circuit breaker (200, 300, 400) comprising three or more terminals (201a, 201b, 201c; 202a, 202b, 202c; 401a, 401b, 410c) and, for each group of two of the terminals, a respective inter-terminal connection branch (a-b, b-c, a-c) between the terminals 201a, 201b, 201c; 202a, 202b, 202c; 401a, 401b, 410c),
wherein the inter-terminal connection branches (a-b, b-c, a-c) each comprise at least one commutation switch arrangement (210a, 210b, 210c; 310a, 310b, 310c; 410a1, 410b1, 410c1, 410a2, 410b2, 410c2), each commutation switch arrangement (210a, 210b, 210c; 310a, 310b, 310c; 410a1, 410b1, 410c1, 410a2, 410b2, 410c2) comprising one commutation switch (210a, 210b, 210c; 310a, 310b, 310c) or one commutation switch (410a1, 410b1, 410c1, 410a2, 410b2, 410c2) per bus interconnection, each commutation switch (210a, 210b, 210c; 310a, 310b, 310c; 410a1, 410b1, 410c1, 410a2, 410b2, 410c2) having a disconnector (211a, 211b, 211c; 311a, 311b, 311c; 411a1, 411b1, 411c1, 411a2, 411b2, 411c2) and a controllable bi-directional semiconductor switch arrangement (212a, 212b, 212c; 312a, 312b, 312c; 412al, 412b1, 412c1, 412a2, 412b2, 412c2) connected in series;
wherein the HVDC circuit breaker (200, 300, 400) further comprises a common main switch (220, 320, 420) configured to take over a switch-off current from each of the commutation switches switch (210a, 210b, 210c; 310a, 310b, 310c; 410a1, 410b1, 410c1, 410a2, 410b2, 410c2), **characterised in that** the main switch comprises a positive end and a negative end,
and wherein the HVDC circuit breaker (200, 300, 400) further comprises, for each of the terminals (201a, 201b, 201c; 202a, 202b, 202c; 401a, 401b, 410c), a respective positive-direction redirect path (208a, 208b, 208c; 308a, 308b, 308c; 408a, 408b, 408c) connected between the respective terminal (201a, 201b, 201c; 202a, 202b, 202c; 401a, 401b, 410c) and the positive end (206, 306, 406) of the main switch (220, 320, 420), and a respective negative-direction redirect path (209a, 209b, 209c; 309a, 309b, 309c; 409a, 409b, 409c) connected between the respective terminal (201a, 201b, 201c; 202a, 202b, 202c; 401a, 401b, 410c) and the negative end (207, 307, 407) of the main switch (220, 320, 420).

2. The HVDC circuit breaker (200, 300, 400) (200, 300, 400) according to any one of the preceding claims, the main switch (220, 320, 420) comprising at least one controllable semiconductor switch (221a1, 221b1; 321a2, 321b2; 421a1, 421b1).

3. The HVDC circuit breaker (200, 300, 400) according to claim 2, the main switch (220, 320, 420) further comprising at least one surge protection device (221a2, 221b2; 321a2, 321b2; 421a2, 421b2), optionally a varistor, connected in parallel to the at least one controllable semiconductor switch (221a1, 221b1; 321a2, 321b2; 421a1, 421b1).

4. The HVDC circuit breaker (200, 300, 400) according to any one of the preceding claims, further comprising a residual current disconnecting circuit breaker (204a, 204b, 204c; 304a, 304b, 304c; 404a, 404b, 404c) between each of the terminals (201a, 201b, 201c; 202a, 202b, 202c; 401a, 401b, 410c) and the corresponding inter-terminal connection branch (a-b, a-c, b-c).

5. The HVDC circuit breaker (400) according to any one of the preceding claims, wherein at least one of the inter-terminal connection branches (a-b, a-c, a-d) comprises a commutation switch arrangement (410a1, 410b1, 410cl, 410a2, 410b2, 410c2) having multiple commutation switches (410a1, 410b1, 410c1, 410a2, 410b2, 410c2) connected in parallel to each other.

6. The HVDC circuit breaker (200) according to any one of the preceding claims, comprising one commutation switch arrangement (210a, 210b, 210c) per inter-terminal connection branch (a-b, a-c, b-c), the commutation switch arrangement (210a, 210b, 210c) having one end connected to a first one of the two terminals (201a, 201b, 201c) of the respective inter-terminal connection branch (a-b, a-c, b-c) and having the other end connected to a second one of the two terminals (201a, 201b, 201c) of the respective inter-terminal connection branch (a-b, a-c, b-c).

7. The HVDC circuit breaker (300, 400) according to any one of claims 1-5, comprising one commutation switch arrangement (310a, 310b, 310c; 410a1, 410b1, 410c1, 410a2, 410b2, 410c2) per terminal, each commutation switch arrangement (310a, 310b, 310c; 410a1, 410b1, 410c1, 410a2, 410b2, 410c2) having one end connected to the respective terminal (301a, 301b, 301c; 401a, 401b, 401c) and having the other end connected to a common interconnection point (315; 415, 416) shared with the other ends of the remaining commutation switch arrangements.

8. The HVDC circuit breaker (200, 300, 400) according to any one of the preceding claims, comprising more than three terminals.

9. The HVDC circuit breaker (200, 300, 400) according to any one of the preceding claims, further comprising a network interface for connecting the circuit breaker to a data network, wherein the HVDC circuit breaker (200, 300, 400) is operatively connected to the network interface for at least one of carrying out a command received from the data network and sending status information on the HVDC circuit breaker (200, 300, 400) to the data network.

10. An HVDC switchyard configured to interconnect three or more HVDC grid segments, at least one pole of each grid segment being connected to a respective terminal of an HVDC circuit breaker (200, 300, 400) according to any one of the preceding claims.

11. The HVDC switchyard according to claim 10 configured to interconnect more than three HVDC grid segments.

12. An HVDC switchyard system configured to interconnect a first HVDC station with at least two further HVDC stations, the HVDC switchyard system comprising the first HVDC station and a HVDC switchyard, wherein at least one pole of the first HVDC station is connected to a terminal of an HVDC circuit breaker (200, 300, 400) according to any one of claims 1-9.

13. The HVDC switchyard system according to claim 12 configured to interconnect the first HVDC station with more than two further HVDC stations.

14. An HVDC grid including three or more HVDC grid segments, and including optionally a first HVDC station and at least two further HVDC stations, the HVDC grid comprising the HVDC switchyard according to any one of claims 10 and 11 or the HVDC grid comprising the HVDC switchyard system according to any one of claims 12 or 13.

## Patentansprüche

1. HVDC-Schutzschalter (200, 300, 400), der drei oder mehr Klemmen (201a, 201b, 201c; 202a, 202b, 202c; 401a, 401b, 410c) und für jede Gruppe von zwei der Klemmen einen jeweiligen klemmenübergreifenden Verbindungszweig (a-b, b-c, a-c) zwischen den Klemmen (201a, 201b, 201c; 202a, 202b, 202c; 401a, 401b, 410c) umfasst,
wobei die klemmenübergreifenden Verbindungszweige (a-b, b-c, a-c) jeweils mindestens eine Kommutierungsschaltanordnung (210a, 210b, 210c; 310a, 310b, 310c; 410a1, 410b1, 410c1, 410a2, 410b2, 410c2) umfassen, wobei jede Kommutierungsschaltanordnung (210a, 210b, 210c; 310a, 310b, 310c; 410a1, 410b1, 410c1, 410a2, 410b2, 410c2) einen Kommutierungsschalter (210a, 210b, 210c; 310a, 310b, 310c) oder einen Kommutierungsschalter (410a1, 410b1, 410c1, 410a2, 410b2, 410c2) pro Busverschaltung umfasst, jeder Kommutierungsschalter (210a, 210b, 210c; 310a, 310b, 310c; 410a1, 410b1, 410c1, 410a2, 410b2, 410c2) einen Unterbrecher (211a, 211b, 211c; 311a, 311b, 311c; 411a1, 411b1, 411c1, 411a2, 411b2, 411c2) und eine steuerbare bidirektionale Halbleiterschaltanordnung (212a, 212b, 212c; 312a, 312b, 312c; 412a1, 412b1, 412c1, 412a2, 412b2, 412c2) aufweist, die in Reihe geschaltet sind; wobei der HVDC-Schutzschalter (200, 300, 400) des Weiteren einen gemeinsamen Hauptschalter (220, 320, 420) umfasst, der ausgestaltet ist, um einen Abschaltstrom von jedem der Kommutierungsschalterschalter (210a, 210b, 210c; 310a, 310b, 310c; 410a1, 410b1, 410c1, 410a2, 410b2, 410c2) zu übernehmen,
**dadurch gekennzeichnet, dass** der Hauptschalter ein positives Ende und ein negatives Ende umfasst, und wobei der HVDC-Schutzschalter (200, 300, 400) des Weiteren für jede der Klemmen (201a, 201b, 201c; 202a, 202b, 202c; 401a, 401b, 410c) einen jeweiligen Umleitpfad der positiven Richtung (208a, 208b, 208c; 308a, 308b, 308c; 408a, 408b, 408c), der zwischen der jeweiligen Klemme (201a, 201b, 201c; 202a, 202b, 202c; 401a, 401b, 410c) und dem positiven Ende (206, 306, 406) des Hauptschalters (220, 320, 420) angeschlossen ist, und einen jeweiligen Umleitpfad der negativen Richtung (209a, 209b, 209c; 309a, 309b, 309c; 409a, 409b, 409c) umfasst, der zwischen der jeweiligen Klemme (201a, 201b, 201c; 202a, 202b, 202c; 401a, 401b, 410c) und dem negativen Ende (207, 307, 407) des Hauptschalters (220, 320, 420) angeschlossen ist.

2. HVDC-Schutzschalter (200, 300, 400) (200, 300, 400) nach einem der vorhergehenden Ansprüche, wobei der Hauptschalter (220, 320, 420) mindestens einen steuerbaren Halbleiterschalter (221a1, 221b1; 321a2, 321b2; 421a1, 421b1) umfasst.

3. HVDC-Schutzschalter (200, 300, 400) nach Anspruch 2, wobei der Hauptschalter (220, 320, 420) des Weiteren mindestens eine Überspannungsschutzvorrichtung (221a2, 221b2; 321a2, 321b2; 421a2, 421b2), gegebenenfalls einen Varistor umfasst, der parallel zu dem mindestens einen steuerbaren Halbleiterschalter (221a1, 221b1; 321a2, 321b2; 421a1, 421b1) geschaltet ist.

4. HVDC-Schutzschalter (200, 300, 400) nach einem der vorhergehenden Ansprüche, des Weiteren umfassend einen den Fehlerstrom trennenden Schutzschalter (204a, 204b, 204c; 304a, 304b, 304c; 404a, 404b, 404c) zwischen jeder der Klemmen (201a, 201b, 201c; 202a, 202b, 202c; 401a, 401b, 410c) und dem entsprechenden klemmenübergreifenden Verbindungszweig (a-b, a-c, b-c).

5. HVDC-Schutzschalter (400) nach einem der vorhergehenden Ansprüche, wobei mindestens einer der klemmenübergreifenden Verbindungszweige (a-b, a-c, a-d) eine Kommutierungsschaltanordnung (410a1, 410b1, 410c1, 410a2, 410b2, 410c2) mit mehreren Kommutierungsschaltern (410a1, 410b1, 410c1, 410a2, 410b2, 410c2) umfasst, die parallel zueinander geschaltet sind.

6. HVDC-Schutzschalter (200) nach einem der vorhergehenden Ansprüche, umfassend eine Kommutierungsschaltanordnung (210a, 210b, 210c) pro klemmenübergreifendem Verbindungszweig (a-b, a-c, b-c), wobei die Kommutierungsschaltanordnung (210a, 210b, 210c) mit einem Ende mit einer ersten der beiden Klemmen (201a, 201b, 201c) des jeweiligen klemmenübergreifenden Verbindungszweigs (a-b, a-c, b-c) verbunden ist, und mit einem anderen Ende mit einer zweiten der beiden Klemmen (201a, 201b, 201c) des jeweiligen klemmenübergreifenden Verbindungszweigs (a-b, a-c, b-c) verbunden ist.

7. HVDC-Schutzschalter (300, 400) nach einem der Ansprüche 1 bis 5, umfassend eine Kommutierungsschaltanordnung (310a, 310b, 310c; 410a1, 410b1, 410c1, 410a2, 410b2, 410c2) pro Klemme, wobei jede Kommutierungsschaltanordnung (310a, 310b, 310c; 410a1, 410b1, 410c1, 410a2, 410b2, 410c2) mit einem Ende mit der jeweiligen Klemme (301a, 301b, 301c; 401a, 401b, 401c) verbunden ist und wobei das andere Ende mit einem gemeinsamen Verschaltungspunkt (315; 415, 416) verbunden ist, der mit den anderen Enden der restlichen Kommutierungsschaltanordnungen gemeinsam genutzt wird.

8. HVDC-Schutzschalter (200, 300, 400) nach einem der vorhergehenden Ansprüche, der mehr als drei Klemmen umfasst.

9. HVDC-Schutzschalter (200, 300, 400) nach einem der vorhergehenden Ansprüche, des Weiteren umfassend eine Netzwerkschnittstelle, um den Schutzschalter mit einem Datennetzwerk zu verbinden, wobei der HVDC-Schutzschalter (200, 300, 400) funktional mit der Netzwerkschnittstelle verbunden ist, um mindestens eines von Ausführen eines Befehls, der von dem Datennetzwerk empfangen wird, und Senden von Statusinformationen bezüglich des HVDC-Schutzschalters (200, 300, 400) an das Datennetzwerk durchzuführen.

10. HVDC-Umspannanlage, die ausgestaltet ist, um drei oder mehr HVDC-Netzsegmente zu verschalten, wobei mindestens ein Pol von jedem Netzsegment mit einer jeweiligen Klemme eines HVDC-Schutzschalters (200, 300, 400) nach einem der vorhergehenden Ansprüche verbunden ist.

11. HVDC-Umspannanlage nach Anspruch 10, die ausgestaltet ist, um mehr als drei HVDC-Netzsegmente zu verschalten.

12. HVDC-Umspannanlagensystem, das ausgestaltet ist, um eine erste HVDC-Station mit mindestens zwei weiteren HVDC-Stationen zu verschalten, wobei das HVDC-Umspannanlagensystem die erste HVDC-Station und eine HVDC-Umspannanlage umfasst, wobei mindestens ein Pol der ersten HVDC-Station mit einer Klemme eines HVDC-Schutzschalters (200, 300, 400) gemäß einem der Ansprüche 1 bis 9 verbunden wird.

13. HVDC-Umspannanlagensystem nach Anspruch 12, das ausgestaltet ist, um die erste HVDC-Station mit mehr als zwei weiteren HVDC-Stationen zu verschalten.

14. HVDC-Netz, das drei oder mehr HVDC-Netzsegmente einschließt, und gegebenenfalls eine erste HVDC-Station und mindestens zwei weitere HVDC-Stationen einschließt, wobei das HVDC-Netz die HVDC-Umspannanlage gemäß einem der Ansprüche 10 und 11 umfasst oder das HVDC-Netz das HVDC-Umspannanlagensystem gemäß einem der Ansprüche 12 oder 13 umfasst.

## Revendications

1. Disjoncteur HVDC (200, 300, 400) comprenant trois ou plusieurs bornes (201a, 201b, 201c ; 202a, 202b, 202c ; 401a, 401b, 410c) et, pour chaque groupe de deux des bornes, une branche de connexion inter-bornes respective (a-b, b-c, a-c) entre les bornes (201a, 201b, 201c ; 202a, 202b, 202c ; 401a, 401b, 410c),
dans lequel les branches de connexion inter-bornes (a-b, b-c, a-c) comprennent chacune un agencement d'interrupteurs de commutation (210a, 210b, 210c ; 310a, 310b, 310c ; 410a1, 410b1, 410c1, 410a2, 410b2, 410c2), chaque agencement d'interrupteurs de commutation (210a, 210b, 2100c ; 310a, 310b, 310c ; 410al, 410bl, 410c1, 410a2, 410b2, 410c2) comprenant un interrupteur de commutation (210a, 210b, 210c ; 310a, 310b, 310c) ou un interrupteur de commutation (410a1, 410b1, 410c1, 410a2, 410b2, 410c2) par interconnexion de bus, chaque interrupteur de commutation (210a, 210b, 210c ; 310a, 310b, 310c ; 410a1, 410b1, 410c1, 410a2, 410b2, 410c2) présentant un déconnecteur (211a, 211b, 211c ; 311a, 311b, 311c ; 411a1, 411b1, 411cl, 411a2, 411b2, 411c2) et un agencement d'interrupteurs à semi-conducteur bidirectionnel réglable (212a, 212b, 212c ; 312a, 312b, 312c ; 412a1, 412b1, 412c1, 412a2, 412b2, 412c2) connectés en série ;
le disjoncteur HVDC (200, 300, 400) comprenant en outre un interrupteur principal commun (220, 320, 420) configuré pour relayer un courant d'arrêt à partir de chacun de l'interrupteur d'interrupteurs de commutation (210a, 210b, 210c ; 310a, 310b, 310c ; 410a1, 410b1, 410c1, 410a2, 410b2, 410c2),
l'interrupteur principal comprenant une extrémité positive et une extrémité négative,
et le disjoncteur HVDC (200, 300, 400) comprenant en outre, pour chacune des bornes (201a, 201b, 201c ; 202a, 202b, 202c ; 401a, 401b, 410c), un trajet de redirection de sens positif respectif (208a, 208b, 208c ; 308a, 308b, 308c ; 408a, 408b, 408c) connecté entre la borne respective (201a, 201b, 201c ; 202a, 202b, 202c ; 401a, 401b, 410c) et l'extrémité positive (206, 306, 406) de l'interrupteur principal (220, 320, 420), et un trajet de redirection de sens négatif respectif (209a, 209b, 209c ; 309a, 309b, 309c ; 409a, 409b, 409c) connecté entre la borne respective (201a, 201b, 201c ; 202a, 202b, 202c ; 401a, 401b, 410c) et l'extrémité négative (207, 307, 407) de l'interrupteur principal (220, 320, 420).

2. Disjoncteur HVDC (200, 300, 400) (200, 300, 400) selon l'une quelconque des revendications précédentes, l'interrupteur principal (220, 320, 420) comprenant au moins un interrupteur à semi-conducteur réglable (221a1, 221b1 ; 321a2, 321b2 ; 421a1, 421b1).

3. Disjoncteur HVDC (200, 300, 400) selon la revendication 2, l'interrupteur principal (220, 320, 420) comprenant en outre au moins un dispositif de protection contre les surintensités (221a2, 221b2 ; 321a2, 321b2 ; 421a2, 421b2), facultativement un varistor, connecté en parallèle à l'interrupteur à semi-conducteur réglable (221a1, 221b1 ; 321a2, 321b2 ; 421a1, 421b1).

4. Disjoncteur HVDC (200, 300, 400) selon l'une quelconque des revendications précédentes, comprenant en outre un disjoncteur de déconnexion de courant résiduel (204a, 204b, 204c ; 304a, 304b, 304c ; 404a, 404b, 404c) entre chacune des bornes (201a, 201b, 201c ; 202a, 202b, 202c ; 401a, 401b, 410c) et la branche de connexion inter-bornes correspondante (a-b, a-c, b-c).

5. Disjoncteur HVDC (400) selon l'une quelconque des revendications précédentes, dans lequel au moins une des branches de connexion inter-bornes (a-b, a-c, a-d) comprend un agencement d'interrupteurs de commutation (410a1, 410b1, 410c1, 410a2, 410b2, 410c2) présentant de multiples interrupteurs de commutation (410a1, 410b1, 410c1, 410a2, 410b2, 410c2) connectés en parallèle les uns aux autres.

6. Disjoncteur HVDC (200) selon l'une quelconque des revendications précédentes, comprenant un agencement d'interrupteurs de commutation (210a, 210b, 210c) par branche de connexion inter-bornes (a-b, a-c, b-c), l'agencement d'interrupteurs de communication (210a, 210b, 210c) présentant une extrémité connectée à une première borne des deux bornes (201a, 201b, 201c) de la branche de connexion inter-bornes respective (a-b, a-c, b-c) et l'autre extrémité connectée à une seconde borne des deux bornes (201a, 201b, 201c) de la branche de connexion inter-bornes respective (a-b, a-c, b-c).

7. Disjoncteur HVDC (300, 400) selon l'une quelconque des revendications 1 à 5, comprenant un agencement d'interrupteurs de commutation (310a, 310b, 310c ; 410a1, 410b1, 410c1, 410a2, 410b2, 410c2) par borne, chaque agencement d'interrupteur de commutation (310a, 310b, 310c ; 410a1, 410b1, 410c1, 410a2, 410b2, 410c2) présentant une extrémité connectée à la borne respective (301a, 301b, 301c ; 401a, 401b, 401c) et présentant l'autre extrémité connectée à un point d'interconnexion commun (315 ; 415, 416) partagé avec les autres extrémités des agencements d'interrupteurs de commutation restants.

8. Disjoncteur HVDC (200, 300, 400) selon l'une quelconque des revendications précédentes, comprenant plus de trois bornes.

9. Disjoncteur HVDC (200, 300, 400) selon l'une quelconque des revendications précédentes, comprenant en outre une interface réseau pour connecter le disjoncteur à un réseau de données, le disjoncteur HVDC (200, 300, 400) étant connecté fonctionnellement à l'interface réseau pour au moins exécuter une commande reçue à partir du réseau de données et/ou envoyer des informations d'état relatives au disjoncteur HVDC (200, 300, 400) au réseau de données.

10. Poste de départ HVDC configuré pour interconnecter trois segments de réseau HVDC ou plus, au moins un pôle de chaque segment de réseau étant connecté à une borne respective d'un disjoncteur HVDC (200, 300, 400) selon l'une quelconque des revendications précédentes.

11. Poste de départ HVDC selon la revendication 10 configuré pour interconnecter plus de trois segments de réseau HVDC.

12. Système de poste de départ HVDC configuré pour interconnecter un premier poste HVDC avec au moins deux autres postes HVDC, le système de poste de départ HVDC comprenant le premier poste HVDC et un poste de départ HVDC, dans lequel un pôle du premier poste HVDC est connecté à une borne d'un disjoncteur HVDC (200, 300, 400) selon l'une quelconque des revendications 1 à 9.

13. Système de poste de départ HVDC selon la revendication 12 configuré pour interconnecter le premier poste HVDC à plus de deux autres postes HVDC.

14. Réseau HVDC comportant trois segments de réseau HVDC ou plus, et comportant facultativement un premier poste HVDC et au moins deux autres postes HVDC, le réseau HVDC comprenant le poste de départ HVDC selon l'une quelconque des revendications 10 et 11 ou le réseau HVDC comprenant le système de poste de départ HVDC selon l'une quelconque des revendications 12 ou 13.
